# EUROPEAN PATENT SPECIFICATION

(11) **EP 4 112 467 B1**
(45) Date of publication and mention of the grant of the patent: **19.03.2025**
(21) Application number: 21182985.8
(22) Date of filing: 30.06.2021
(51) Int. Cl.: B64D 11/06, B64C 1/18

(54) **MOUNTING RAIL ARRANGEMENT FOR AN AIRCRAFT FLOOR, FLOOR STRUCTURE AND AIRCRAFT HAVING THE SAME**
BEFESTIGUNGSSCHIENENANORDNUNG FÜR EINEN FLUGZEUGBODEN, BODENSTRUKTUR UND FLUGZEUG DAMIT
AGENCEMENT DE RAIL DE MONTAGE POUR UN PLANCHER D'AÉRONEF, STRUCTURE DE PLANCHER ET AÉRONEF EN ÉTANT ÉQUIPÉ

(43) Date of publication of application: 04.01.2023
(73) Proprietor: Airbus Operations GmbH, 21129 Hamburg (DE)
(72) Inventor: Gross, Claus-Peter, 21129 Hamburg (DE)
(74) Representative: KASTEL Patentanwälte PartG mbB

(56) References cited:
- EP-A1- 2 733 061
- EP-A1- 2 848 533
- CN-A- 109 110 134
- CN-U- 206 029 362
- CN-U- 211 399 178
- US-A1- 2008 098 682
- US-A1- 2018 016 009
- US-A1- 2020 094 970
- US-B2- 8 979 450

## Description

The invention relates to a mounting rail arrangement for an aircraft floor. Furthermore, the invention relates to a floor structure for a fuselage of an aircraft and an aircraft having said floor structure.

US 2010 / 0 108 808 A1 discloses a system for fixing. A fixing element is inserted into an elongated hole and turned in order to fix the parts together.

EP 3 315 408 B1 discloses a seat rail adapter comprising two mounting parts. The mounting parts are anchored into a C-shaped channel by pivoting.

EP 3 296 206 A1 discloses a seat movement-securing device that includes a seat rail that may be fixed to an attachment member. A locking mechanism that is securely installed on the attachment member is used to secure the attachment member to the seat rail.

US 6 302 358 B1 discloses a system to quickly convert part of the main deck of an aircraft from a passenger transport configuration to a freight transport configuration.

DE 102018 123 251 A1 discloses a rail system for fixing fittings in a cabin of a vehicle includes a first elongate rail body with a fixing side for fixing to a vehicle structure, an opposite support side with a support surface for receiving fittings, and a rail cross-section extending between the fixing side and the support side, and several fixing inserts which can be fixed along the support surface. The rail cross-section has two mutually opposing legs which are spaced apart from each other and run perpendicularly to the support surface, and the fixing inserts are configured so as not to protrude beyond the support surface.

CN 211 399 178 U discloses a fixed frame for a textile machine. CN 206 029 362 U discloses a drilling fixture.

US 2008 / 0 098 682 A1 discloses a floor panel assembly. A floor panel assembly may include a floor panel comprising a pair of opposed surfaces, wherein the floor panel includes at least one key hole slot defined in one of the opposed surfaces. The assembly also includes at least one seat track positioned between the opposed surfaces, wherein the seat track comprises at least one key hole slot defined therein that is substantially aligned with a respective key hole slot defined in the floor panel. In addition, the assembly includes at least one fastener assembly comprising a fastener configured to be positioned through a respective key hole slot defined in the floor panel and the seat track.

EP 2 848 533 A1 discloses a mounting system for objects in a transportation means that comprises a profile rail, at least one locking device with a base body that can be brought into surface contact with a supporting surface of the profile rail and at least one locking body which is interlockable with the profile rail, as well as an actuating device with an actuating element that extends parallel to the profile rail and a clamping body that is connected to the actuating element.

US 8 979 450 B2 discloses function elements for fixing in seat rails of aircraft. The function element includes a fixing rail with a web running in the x-direction and a multiplicity of extensions which protrude beyond the web in a y-direction to form a T profile. The the fixing rail is formed corresponding to the seat rail such that the fixing rail can be inserted in the seat rail and moved along the x-direction into a holding position in which the extensions sit between the holes below the slots, at least one fixing peg which is arranged mobile on the fixing rail and can be brought into a blocking position in which the fixing peg engages in a hole of the seat rail so that the function element is fixed in the x-direction.

US 2018 / 0 016 009 A1 discloses a mounting apparatus for retaining aircraft monuments, the apparatus including a first support, a second support, and a joiner connecting a first end of the first support and a first end of the second support, a stay having a first end pivotably connected to the joiner, a tie rod configured to connect the joiner to an attachment point of the aircraft, a first rail having a first base configured to connect to an upper surface of the monument and a first facing configured to connect to the first support and the second support, and a second rail having a second base configured to connect to the upper surface of the monument and a second facing configured to connect to a second end of the stay.

CN 109 110 134 A discloses an aero seat attachment device that can prevent dislocation from sliding.

US 2020 / 0 094 970 A1 discloses systems for securing fixtures to the floor of a transportation vehicle. The securing system has a simplified structure comprising a securing device with two C-profiles comprising a web extending between a top plate and a bottom plate, the profiles being joined by an omega-shape fishplate. Vertical lateral walls formed by the webs of the profiles are perforated.

EP 2 733 061 A1 discloses a fastening arrangement for attaching a floor to a support structure. The fastening arrangement includes a cross beam, a floor panel, a forked bolt attached to the cross beam via a barrel nut, and a lug bolt rotary connected to the fork bolt. The fork bolt has a head with a slit for accommodating an end of the lug bolt, such that the lug bolt is rotary in the direction of the slit. The head of the fork bolt is rotatable in the opening of the floor panel for screwing the fork bolt into the barrel nut by rotating the lug bolt.

It is the object of the invention to allow full floor structural decoupling for monuments.

The object is achieved using the subject-matter of the independent claim.

Preferred embodiments are subject-matter of the dependent claims.

The invention provides a mounting rail arrangement for an aircraft floor, the mounting rail arrangement comprising a first mounting rail having a first bottom leg, a first top leg, and a first mounting portion that is arranged between the first bottom and top legs; a second mounting rail having a second bottom leg, a second top leg, and a second mounting portion that is arranged between the second bottom and top legs, wherein the first and second mounting portions face each other and define a gap therebetween, wherein the first mounting portion includes a first mounting hole and the second mounting portion includes a second mounting hole, the mounting holes being aligned to receive a mounting bolt.

The mounting rail arrangement further comprises the mounting bolt that is inserted in the first and second mounting holes.

The mounting bolt includes a cross hole for receiving a bolt member, e.g., the attachment bolt. The mounting bolt is arranged so that the cross hole is arranged within the gap so as to be accessible.

The mounting rail arrangement further comprises an attachment bolt that is inserted in the cross hole and fixed to the mounting bolt so as to protrude above the top legs and prevent the mounting bolt from sliding out of the mounting holes. Preferably, the first mounting rail and/or the second mounting rail is made of metal or metal alloy.

Preferably, the first mounting rail and/or the second mounting rail is made of a fiber composite material.

Preferably, the mounting rail arrangement further comprises a lower plate member attached to the bottom legs.

Preferably, the mounting rail arrangement further comprises an upper plate member attached to the top legs, the upper plate being configured for allowing protrusion of at least one bolt member.

Preferably, the mounting rail arrangement further comprises at least one floor panel that is attached to the top legs or the upper plate member.

The invention provides a floor structure for a fuselage of an aircraft, the floor structure comprising a plurality of cross beams that are configured to horizontally extend in a direction orthogonal to a flight direction, and at least one mounting rail arrangement as disclosed above, wherein the first mounting rail and the second mounting rail are aligned parallel to the flight direction.

Preferably, the floor structure further comprises a plurality of support beams that are attached to at least one of the cross beams, so as to allow support of the cross beams on the fuselage.

Preferably, at least two mounting rail arrangements are arranged in parallel and spaced apart from each other.

The invention provides a fuselage for an aircraft, the fuselage comprising the mounting rail arrangement as disclosed above and/or a floor structure as disclosed above.

Preferably, the fuselage further comprises a monument and/or cabin attendant seats that is attached to the mounting rail arrangement and/or the floor structure.

The invention provides an aircraft having a mounting rail arrangement as disclosed above and/or a floor structure as disclosed above and/or a fuselage as disclosed above.

The invention is about a full floor structural decoupling for monuments and/or cabin attendant seats. The cabin area of a single aisle aircraft needs to be rather variable in order to satisfy the customer requirements regarding installation and arrangement of monuments, such as galley, lavatory, etc.

Current designs are usually weight optimized for the respective Head of Version (hereafter: HoV). For each HoV the design is usually adapted. HoV complexity, however, has been increasing in recent years, which may delay or hinder continuous ramp-up of production.

The invention proposes a design that does not require structural changes, and allows all HoVs to be installed with a standardized floor structure. Ramp-up is secured by standardization in engineering and production.

The invention make use of the existing hard point fixation principle and provides full flexibility in x-direction by replacing the usual I-beam profile with a double C-profile. The double C-profile provides the hole pattern for all variants. All concepts are at least weight neutral compared to the currently use configurations. This is true in particular, if the C-profiles are made from CFRP. Further opportunity for weight reduction is identified by adding a plate for better load introduction from profile to plate and then from plate to cross beams. The double shell concept with its two plates leads to a stiff box design. Selected CFRP material cost may be compensated by higher automatization, reduced part count and non-recurring cost (NRC) (customization), fast ramp up and rate flexibility.

Embodiments of the invention are described in more detail making reference to the accompanying drawings:
- Fig. 1: depicts an embodiment of an aircraft;
- Fig. 2: depicts an embodiment of an aft section;
- Fig. 3: depicts an embodiment of a floor structure;
- Fig. 4: depicts a variant of the floor structure of Fig. 3;
- Fig. 5: depicts an embodiment of a mounting rail; and
- Fig. 6: depicts a head-on view of the mounting rail of Fig. 5.

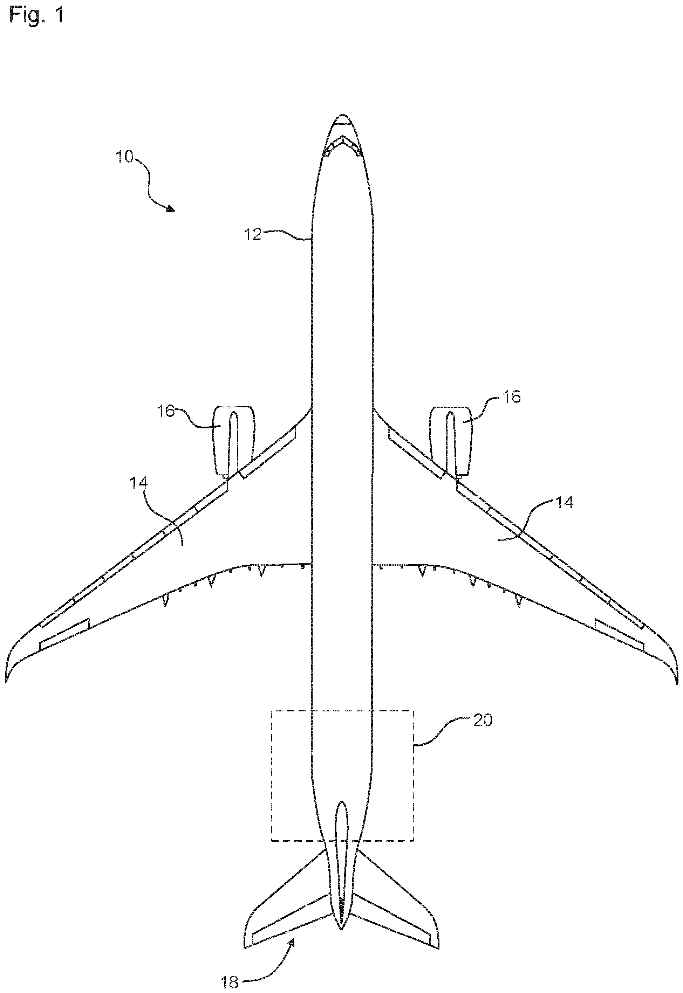

Fig. 1 depicts an aircraft 10. The aircraft 10 comprises a fuselage 12 and a pair of wings 14 attached to the fuselage 12. The wings 14 comprise engines 16. The fuselage 12 further comprises a tail plane section 18 and an aft section 20 that is arranged near the tail plane section 18.

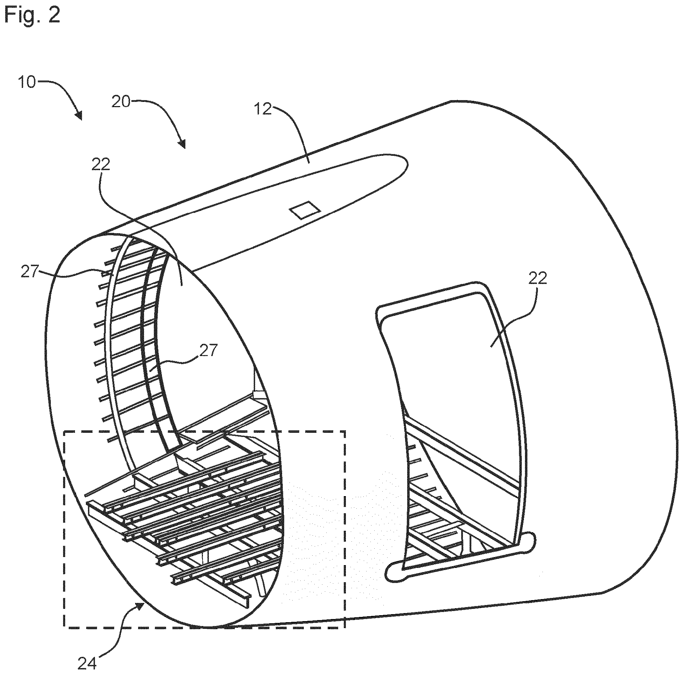

As depicted in Fig. 2, the aft section 20 includes a passenger door 22 and a floor structure 24 that is arranged within the aft section 20. The floor structure 24 is supported by the fuselage 12.

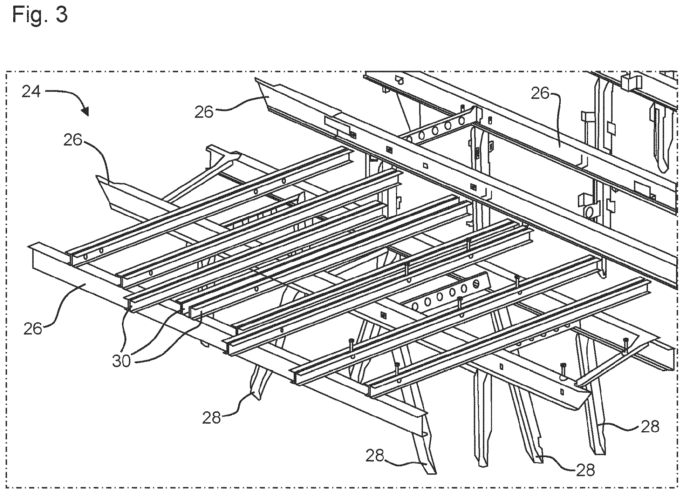

Referring to Fig. 3, the floor structure 24 comprises a plurality of cross beams 26 that are laterally horizontally aligned. The cross beams 26 may be attached to a frame 27 (Fig. 2). The floor structure 24 also comprises a plurality of support beams 28 that are attached to the cross beams 26 and vertically support the cross beams 26. The support beams 28 are also preferably attached to the frame 27.

The floor structure 24 comprises a plurality of mounting rail arrangements 30. The mounting rail arrangements 30 may be supported by the cross beams 26. The mounting rails 30 are aligned parallel to the flight direction. The mounting rail arrangements 30 are spaced apart so as to form a mounting grid for cabin monuments and/or cabin attendant seats.

The floor structure 24 comprises a floor panel 32 that is directly supported or indirectly supported via another member.

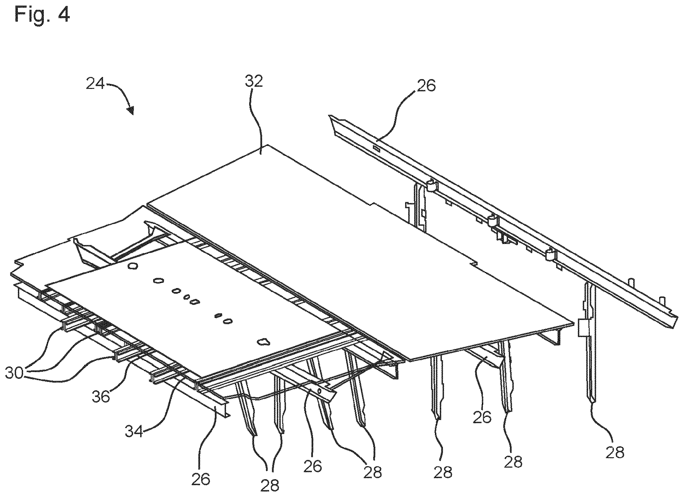

In a variant depicted in Fig. 4, the floor structure 24 may be configured as a box floor structure. In this case the floor structure 24 comprises a lower plate member 34 and/or an upper plate member 36. The lower plate member 34 is fixed to the mounting rail arrangements 30 and arranged between the mounting rail arrangements 30 and the cross beams 26. The upper plate member 36 is fixed to the mounting rail 30 and arranged between the mounting rail arrangements 30 and the floor panel 32.

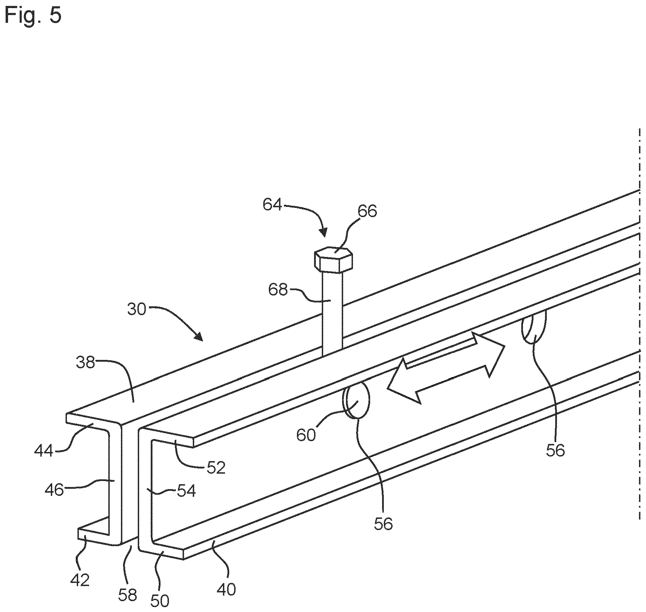

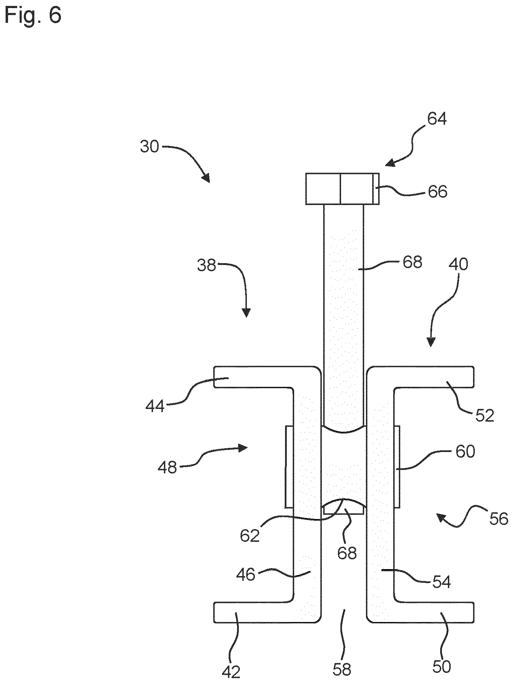

Referring to Fig. 5 and Fig. 6, the mounting rail arrangement 30 comprises a first mounting rail 38 and a second mounting rail 40.

The first mounting rail 38 has a first bottom leg 42, a first top leg 44, and a first mounting portion 46. The first bottom leg 42 and the first top leg 44 are spaced apart from each other by the first mounting portion 46. The first mounting portion 46 includes a plurality of first mounting holes 48 that are distributed along the longitudinal direction of the first mounting rail 38.

The second mounting rail 40 has a second bottom leg 50, a second top leg 52, and a second mounting portion 54. The second bottom leg 50 and the second top leg 52 are spaced apart from each other by the second mounting portion 54. The second mounting portion 54 includes a plurality of second mounting holes 56 that are distributed along the longitudinal direction of the second mounting rail 40.

The first and second mounting rails 38, 40 are arranged such that the first and second mounting portions 46, 54 face each other. The first and second mounting rails 38, 40 define a gap 58 between them so that the first and second mounting portions 46, 54 are spaced apart from each other. The first and second mounting rails 38, 40 are arranged so that corresponding first and second mounting holes 48, 56 are aligned such that a mounting bolt (60) may pass through them.

Furthermore, the first and second bottom and top legs 42, 44, 50, 52 are aligned so that they may evenly support the lower or upper plate member 34, 36 or the floor panel 32.

The mounting rail arrangement 30 comprises the mounting bolt 60 inserted into the first and second mounting holes 48, 56. The mounting bolt 60 includes a cross hole 62. The cross hole 62 is preferably formed in the center of the mounting bolt 60 and configured as a through hole. The cross hole 62 preferably includes threads for a preferably threaded attachment bolt (64).

The mounting rail arrangement 30 comprises the attachment bolt 64 that is configured for attachment of a cabin monument and/or cabin attendant seats. The attachment bolt 64 may comprise a bolt head 66 and a bolt shaft 68 that is preferably threaded. The bolt head 66 may serve in installing the cabin monument and/or the cabin attendant seat. The bolt shaft 68 is inserted, preferably threaded, into the cross hole 62. The attachment bolt 64 blocks movement of the mounting bolt 60 along its axis. The overall length of the attachment bolt 64 is chosen so that the attachment bolt 64 protrudes from the gap 58 and, if applicable, from the floor panel 32 and/or the upper plate member 36.

In order to allow full floor structural decoupling for monuments and/or cabin attendant seats, the invention proposes a mounting rail arrangement (30). The mounting rail arrangement (30) includes two mounting rails (38, 40) having a plurality of mounting holes (48, 56) distributed along their longitudinal direction. A mounting bolt (60) is inserted into the mounting holes (48, 56) and an attachment bolt (64) for fixing a cabin monument and/or a cabin attendant seat is inserted into the mounting bolt (60). As a result, the cabin monument and/or cabin attendant seat may be installed on at different locations and/or with different orientations using all kinds of configurations enabled by the mounting holes (48, 56).

### List of reference signs:

- 10: aircraft
- 12: fuselage
- 14: wing
- 16: engine
- 18: tail plane section
- 20: aft section
- 22: passenger door
- 24: floor structure
- 26: cross beam
- 27: frame
- 28: support beam
- 30: mounting rail arrangement
- 32: floor panel
- 34: lower plate member
- 36: upper plate member
- 38: first mounting rail
- 40: second mounting rail
- 42: first bottom leg
- 44: first top leg
- 46: first mounting portion
- 48: first mounting hole
- 50: second bottom leg
- 52: second top leg
- 54: second mounting portion
- 56: second mounting hole
- 58: gap
- 60: mounting bolt
- 62: cross hole
- 64: attachment bolt
- 66: bolt head
- 68: bolt shaft

## Claims

1. A mounting rail arrangement (30) for an aircraft floor, the mounting rail arrangement (30) comprising a first mounting rail (38) having a first bottom leg (42), a first top leg (44), and a first mounting portion (46) that is arranged between the first bottom and top legs (42, 44); a second mounting rail (40) having a second bottom leg (50), a second top leg (52), and a second mounting portion (54) that is arranged between the second bottom and top legs (50, 52), wherein the first and second mounting rails (38, 40) are separate mounting rails, wherein the first and second mounting portions (46, 54) face each other and define a gap (58) therebetween, wherein the first mounting portion (46) includes a first mounting hole (48) and the second mounting portion (54) includes a second mounting hole (56), the mounting holes (48, 56) being aligned to receive a mounting bolt (60),
wherein the mounting rail arrangement (30) further comprises
the mounting bolt (60) and an attachment bolt (64) that is configured for attachment of a cabin monument and/or cabin attendant seats, wherein the mounting bolt (60) is inserted in the first and second mounting holes (48, 56), wherein the mounting bolt (60) includes a cross hole (62) for receiving the attachment bolt (64), and wherein the mounting bolt (60) is arranged so that the cross hole (62) is arranged within the gap (58) so as to be accessible,
wherein the attachment bolt (64) is inserted in the cross hole (62) and fixed to the mounting bolt (60) so as to protrude above the top legs (44, 52) and prevent the mounting bolt (60) from sliding out of the mounting holes (48, 56).

2. The mounting rail arrangement (30) according to claim 1, wherein the first mounting rail (38) and/or the second mounting rail (40) is made of metal or metal alloy.

3. The mounting rail arrangement (30) according to any of the preceding claims, wherein the first mounting rail (38) and/or the second mounting rail (40) is made of a fiber composite material.

4. The mounting rail arrangement (30) according to any of the preceding claims, further comprising a lower plate member (34) attached to the bottom legs (42, 50).

5. The mounting rail arrangement (30) according to any of the preceding claims, further comprising an upper plate member (36) attached to the top legs (44, 52), the upper plate member (36) being configured for allowing protrusion of the attachment bolt (64).

6. The mounting rail arrangement (30) according to any of the preceding claims, further comprising at least one floor panel (32) that is attached to the top legs (44, 52) or the upper plate member (36).

7. The mounting rail arrangement (30) according to any of the preceding claims, wherein the overall length of the attachment bolt (64) is chosen so that the attachment bolt (64) protrudes from the gap (58), and, if applicable, from the floor panel (32) and/or the upper plate member (36).

8. A floor structure (24) for a fuselage (12) of an aircraft (10), the floor structure (24) comprising a plurality of cross beams (26) that are configured to horizontally extend in a direction orthogonal to a flight direction, and at least one mounting rail arrangement (30) according to any of the preceding claims, wherein the first mounting rail (38) and the second mounting rail (40) are aligned parallel to the flight direction.

9. The floor structure (24) according to claim 8, further comprising a plurality of support beams (28) that are attached to at least one of the cross beams (26), so as to allow support of the cross beams (26) on the fuselage (12).

10. The floor structure (24) according to any of the claims 8 or 9, wherein at least two mounting rail arrangements (30) are arranged in parallel and spaced apart from each other.

11. A fuselage (12) for an aircraft (10), the fuselage (12) comprising a mounting rail arrangement (30) according to any of the claims 1 to 7 and/or a floor structure (24) according to any of the claims 8 to 10.

12. The fuselage (12) according to claim 11, further comprising a monument and/or cabin attendant seat that is attached to the mounting rail arrangement (30) and/or the floor structure (24).

13. An aircraft (10) having a mounting rail arrangement (30) according to any of the claims 1 to 7 and/or a floor structure (24) according to any of the claims 8 to 10 and/or a fuselage (12) according to claim 11 or 12.

## Patentansprüche

1. Befestigungsschienenanordnung (30) für einen Flugzeugboden, wobei die Befestigungsschienenanordnung (30) eine erste Befestigungsschiene (38) mit einem ersten unteren Schenkel (42), einem ersten oberen Schenkel (44) und einem ersten Befestigungsabschnitt (46), der zwischen dem ersten unteren und oberen Schenkel (42, 44) angeordnet ist; eine zweite Befestigungsschiene (40) mit einem zweiten unteren Schenkel (50), einem zweiten oberen Schenkel (52) und einem zweiten Befestigungsabschnitt (54), der zwischen dem zweiten unteren und oberen Schenkel (50, 52) angeordnet ist, umfasst, wobei die erste und die zweite Befestigungsschiene (38, 40) separate Befestigungsschienen sind, wobei der erste und der zweite Befestigungsabschnitt (46, 54) einander zugewandt sind und einen Spalt (58) dazwischen definieren, wobei der erste Befestigungsabschnitt (46) ein erstes Befestigungsloch (48) und der zweite Befestigungsabschnitt (54) ein zweites Befestigungsloch (56) aufweist, wobei die Befestigungslöcher (48, 56) ausgerichtet sind, um einen Befestigungsbolzen (60) aufzunehmen,
wobei die Befestigungsschienenanordnung (30) ferner den Befestigungsbolzen (60) und einen Anschlussbolzen (64), der zum Anbringen eines Kabinenmoduls und/oder von Flugbegleitersitzen ausgelegt ist, umfasst, wobei der Befestigungsbolzen (60) in das erste und das zweite Befestigungsloch (48, 56) eingesetzt ist, wobei der Befestigungsbolzen (60) ein Querloch (62) zur Aufnahme des Anschlussbolzens (64) aufweist, und wobei der Befestigungsbolzen (60) so angeordnet ist, dass das Querloch (62) innerhalb des Spalts (58) angeordnet ist, um zugänglich zu sein,
wobei der Anschlussbolzen (64) in das Querloch (62) eingesetzt und am Befestigungsbolzen (60) befestigt ist, sodass er über die oberen Schenkel (44, 52) hinausragt und verhindert, dass der Befestigungsbolzen (60) aus den Befestigungslöchern (48, 56) herausrutscht.

2. Befestigungsschienenanordnung (30) nach Anspruch 1, wobei die erste Befestigungsschiene (38) und/oder die zweite Befestigungsschiene (40) aus Metall oder Metalllegierung hergestellt ist.

3. Befestigungsschienenanordnung (30) nach einem der vorhergehenden Ansprüche, wobei die erste Befestigungsschiene (38) und/oder die zweite Befestigungsschiene (40) aus einem Faserverbundmaterial hergestellt ist.

4. Befestigungsschienenanordnung (30) nach einem der vorhergehenden Ansprüche, ferner umfassend ein unteres Plattenelement (34), das an den unteren Schenkeln (42, 50) befestigt ist.

5. Befestigungsschienenanordnung (30) nach einem der vorhergehenden Ansprüche, ferner umfassend ein oberes Plattenelement (36), das an den oberen Schenkeln (44, 52) befestigt ist, wobei das obere Plattenelement (36) dazu ausgelegt ist, ein Herausragen des Befestigungsbolzens (64) zu ermöglichen.

6. Befestigungsschienenanordnung (30) nach einem der vorhergehenden Ansprüche, ferner umfassend mindestens eine Bodenplatte (32), die an den oberen Schenkeln (44, 52) oder dem oberen Plattenelement (36) befestigt ist.

7. Befestigungsschienenanordnung (30) nach einem der vorhergehenden Ansprüche, wobei die Gesamtlänge des Anschlussbolzens (64) so gewählt ist, dass der Anschlussbolzen (64) aus dem Spalt (58) und gegebenenfalls aus der Bodenplatte (32) und/oder dem oberen Plattenelement (36) herausragt.

8. Bodenstruktur (24) für einen Rumpf (12) eines Flugzeugs (10), wobei die Bodenstruktur (24) eine Mehrzahl von Querträgern (26), die dazu ausgelegt sind, sich horizontal in einer Richtung rechtwinklig zur Flugrichtung zu erstrecken, und mindestens eine Befestigungsschienenanordnung (30) nach einem der vorhergehenden Ansprüche umfasst, wobei die erste Befestigungsschiene (38) und die zweite Befestigungsschiene (40) parallel zur Flugrichtung ausgerichtet sind.

9. Bodenstruktur (24) nach Anspruch 8, ferner umfassend eine Mehrzahl von Stützträgern (28), die an mindestens einem der Querträger (26) befestigt sind, um eine Abstützung der Querträger (26) am Rumpf (12) zu ermöglichen.

10. Bodenstruktur (24) nach einem der Ansprüche 8 oder 9, wobei mindestens zwei Befestigungsschienenanordnungen (30) parallel und voneinander beabstandet angeordnet sind.

11. Rumpf (12) für ein Flugzeug (10), wobei der Rumpf (12) eine Befestigungsschienenanordnung (30) nach einem der Ansprüche 1 bis 7 und/oder eine Bodenstruktur (24) nach einem der Ansprüche 8 bis 10 umfasst.

12. Rumpf (12) nach Anspruch 11, ferner umfassend ein Kabinenmodul und/oder einen Flugbegleitersitz, der an der Befestigungsschienenanordnung (30) und/oder der Bodenstruktur (24) befestigt ist.

13. Flugzeug (10) mit einer Befestigungsschienenanordnung (30) nach einem der Ansprüche 1 bis 7 und/oder einer Bodenstruktur (24) nach einem der Ansprüche 8 bis 10 und/oder einem Rumpf (12) nach Anspruch 11 oder 12.

## Revendications

1. Agencement (30) de rails de montage pour un plancher d'aéronef, l'agencement (30) de rails de montage comportant un premier rail (38) de montage doté d'une première branche inférieure (42), d'une première branche supérieure (44) et d'une première partie (46) de montage qui est disposée entre les premières branches inférieure et supérieure (42, 44) ; un second rail (40) de montage doté d'une seconde branche inférieure (50), d'une seconde branche supérieure (52) et d'une seconde partie (54) de montage qui est disposée entre les secondes branches inférieure et supérieure (50, 52), les premier et second rails (38, 40) de montage étant des rails de montage distincts, les première et seconde parties (46, 54) de montage se faisant face et définissant un écartement (58) entre elles, la première partie (46) de montage comprenant un premier trou (48) de montage et la seconde partie (54) de montage comprenant un second trou (56) de montage, les trous (48, 56) de montage étant alignés pour recevoir un boulon (60) de montage,
l'agencement (30) de rails de montage comportant en outre le boulon (60) de montage et un boulon (64) de fixation qui est configuré pour la fixation d'un monument de cabine et/ou de sièges pour personnel de cabine, le boulon (60) de montage étant inséré dans les premier et second trous (48, 56) de montage, le boulon (60) de montage comprenant un trou transversal (62) destiné à recevoir le boulon (64) de fixation, et le boulon (60) de montage étant disposé de telle sorte que le trou transversal (62) soit disposé à l'intérieur de l'écartement (58) de façon à être accessible,
le boulon (64) de fixation étant inséré dans le trou transversal (62) et fixé au boulon (60) de montage de façon à faire saillie au-dessus des branches supérieures (44, 52) et à empêcher le boulon (60) de montage de glisser hors des trous (48, 56) de montage.

2. Agencement (30) de rails de montage selon la revendication 1, le premier rail (38) de montage et/ou le second rail (40) de montage étant constitués de métal ou d'alliage métallique.

3. Agencement (30) de rails de montage selon l'une quelconque des revendications précédentes, le premier rail (38) de montage et/ou le second rail (40) de montage étant constitués d'un matériau composite à fibres.

4. Agencement (30) de rails de montage selon l'une quelconque des revendications précédentes, comportant en outre un élément (34) de plaque inférieure fixé aux branches inférieures (42, 50).

5. Agencement (30) de rails de montage selon l'une quelconque des revendications précédentes, comportant en outre un élément (36) de plaque supérieure fixé aux branches supérieures (44, 52), l'élément (36) de plaque supérieure étant configuré pour permettre au boulon (64) de fixation de faire saillie.

6. Agencement (30) de rails de montage selon l'une quelconque des revendications précédentes, comportant en outre au moins un panneau (32) de plancher qui est fixé aux branches supérieures (44, 52) ou à l'élément (36) de plaque supérieure.

7. Agencement (30) de rails de montage selon l'une quelconque des revendications précédentes, la longueur hors tout du boulon (64) de fixation étant choisie de telle sorte que le boulon (64) de fixation dépasse de l'écartement (58), et, le cas échéant, du panneau (32) de plancher et/ou de l'élément (36) de plaque supérieure.

8. Structure (24) de plancher pour un fuselage (12) d'un aéronef (10), la structure (24) de plancher comportant une pluralité de traverses (26) qui sont configurées pour s'étendre horizontalement dans une direction orthogonale à une direction de vol, et au moins un agencement (30) de rails de montage selon l'une quelconque des revendications précédentes, le premier rail (38) de montage et le second rail (40) de montage étant alignés parallèlement à la direction de vol.

9. Structure (24) de plancher selon la revendication 8, comportant en outre une pluralité de poutres (28) d'appui qui sont fixées à au moins une des traverses (26), de façon à permettre un appui des traverses (26) sur le fuselage (12).

10. Structure (24) de plancher selon l'une quelconque des revendications 8 ou 9, au moins deux agencements (30) de rails de montage étant disposés en parallèle et espacés l'un par rapport à l'autre.

11. Fuselage (12) pour aéronef (10), le fuselage (12) comportant un agencement (30) de rails de montage selon l'une quelconque des revendications 1 à 7 et/ou une structure (24) de plancher selon l'une quelconque des revendications 8 à 10.

12. Fuselage (12) selon la revendication 11, comportant en outre un monument et/ou un siège pour personnel de cabine qui est fixé à l'agencement (30) de rails de montage et/ou à la structure (24) de plancher.

13. Aéronef (10) doté d'un agencement (30) de rails de montage selon l'une quelconque des revendications 1 à 7 et/ou d'une structure (24) de plancher selon l'une quelconque des revendications 8 à 10 et/ou d'un fuselage (12) selon la revendication 11 ou 12.
